(19) **Europäisches Patentamt**

**European Patent Office**

**Office européen des brevets**

(11) **EP 0 249 741 B2**

(12) **NEUE EUROPÄISCHE PATENTSCHRIFT**

(45) Veröffentlichungstag und Bekanntmachung des Hinweises auf die Entscheidung über den Einspruch:
**25.10.2000 Patentblatt 2000/43**

(45) Hinweis auf die Patenterteilung:
**27.12.1990 Patentblatt 1990/52**

(21) Anmeldenummer: **87106907.6**

(22) Anmeldetag: **13.05.1987**

(51) Int. Cl.⁷: **D01H 13/26**, G01R 13/20

(54) **Verfahren zur Ausgabe von Messergebnissen in graphischer Form bei Prüfgeräten für textiles Prüfgut**

Display process for measurements in graphical form in testing appliances for textile test goods

Procédé de présentation de résultats de mesure sous forme graphique dans des appareils de contrôle pour des échantillons de textile

(84) Benannte Vertragsstaaten:
**BE DE ES FR GB IT**

(30) Priorität: **21.05.1986 CH 204386**

(43) Veröffentlichungstag der Anmeldung:
**23.12.1987 Patentblatt 1987/52**

(73) Patentinhaber: **ZELLWEGER LUWA AG**
**8610 Uster (CH)**

(72) Erfinder:
• **Furter, Richard**
**CH-6300 Zug (CH)**

• **Christen, Benno**
**CH-8404 Winterthur (CH)**

(56) Entgegenhaltungen:
**DE-A- 3 230 754       DE-A- 3 237 371**
**DE-C- 3 303 770**

• **PATENT ABSTRACTS OF JAPAN, Band 8, Nr. 23 (P-251)[1460], 31. Januar 1984; & JP-A-58 180 911 (MITSUBISHI DENKI K.K.) 22-10-1983**
• **Zeitschrift mittex 7/84, Qualitätskontrolle/Etikettierung, Seiten 259-262**

EP 0 249 741 B2

**Beschreibung**

Die Erfindung betrifft ein Verfahren zur Ausgabe von Messergebnissen in graphischer Form bei Prüfgeräten für textiles Prüfgut, wie Garne, Vorgarne und Bänder, mit welchen von jedem zu prüfenden Los eine Anzahl von Einzelproben in Form einer sogenannten Messreihe geprüft und zumindest ein Teil der Messergebnisse in graphischer Form ausgegeben wird.

In den Labors von Textilbetrieben, vornehmlich von Spinnereien, werden Stichprobenprüfungen zur Bestimmung gewisser textiler Parameter, wie beispielsweise Masseschwankungen, Haarigkeit, Zugfestigkeit, Feinheit, Drehung, usw. vorgenommen. Dabei erweist es sich aus statistischen Gründen als notwendig, von jedem zu prüfenden Los eine grössere Anzahl von Einzelproben in Form einer sogenannten Messreihe zu prüfen, wobei neben numerisch darstellbaren Messwerten auch solche anfallen, deren volle Aussagekraft nur durch graphische Darstellung zu erzielen ist.

Beispiele dafür sind insbesondere das Diagramm der Masseschwankungen längs der geprüften textilen Probe, das Spektrogramm, die Längenvariationskurve und das Häufigkeitsdiagramm.

Beim Diagramm der Masseschwankungen ist die Abtastlänge im Messorgan möglichst kurz gehalten, beispielsweise 8 mm, wobei aus Gründen der statistischen Sicherheit die Stichprobenlänge möglichst gross sein sollte. Im Sinne eines rationellen Einsatzes der Prüfmittel wird daher die Probe mit hoher Geschwindigkeit durch das Messorgan gezogen, so dass die ermittelten Masseschwankungen im Prüfgerät mit relativ hohen Frequenzen anfallen.

Das Spektrogramm stellt das Spektrum der im Diagramm enthaltenen Wellenlängen dar und wird in der Regel über eine Fourier-Analyse erhalten. Aus dem Spektrogramm lassen sich wichtige Rückschlüsse auf die Qualität der Probe und auf die Ursache periodischer oder quasi-periodischer Fehler ziehen.

Die Längenvariationskurve gibt die Grösse des Variationskoeffizienten der Masse in Funktion von der Abtastlänge an und liefert ebenfalls Aufschlüsse über die Qualität der Probe und die Ursache von Fehlern.

Heutige Rechner können die Auswertung äusserst rasch während der Messzeit durchführen, so dass prinzipiell eine Anzeige der Messergebnisse am Ende der Messung möglich ist. Für Zahlenwerte sind als Anzeigeinstrumente Zeigerinstrumente und digitale Anzeigen bekannt, für graphische Darstellungen werden vornehmlich Tintenschreiber verwendet, welche die erwähnten graphischen Darstellungen auf einem geeigneten Papierstreifen ausgeben.

Tintenschreiber haben jedoch eine Reihe von Nachteilen:

- Sie weisen eine hohe Störanfälligkeit auf, weil die Schreibfedern in der relativ staubigen Laborluft von Textilbetrieben leicht verstopfen, und sie sind ausserdem schwierig zu bedienen.

- Ihr Frequenzgang ist stark beschränkt, so dass beispielsweise mit zunehmender Prüfgeschwindigkeit die Amplitude der aufgezeichneten Diagramme abnimmt.

- Wenn eine Grafik mit einer Skala benötigt wird, muss speziell vorbedrucktes Registrierpapier verwendet werden, wobei in vielen Fällen die Aufzeichnung der Grafik mit dem Vordruck auf dem Papier in Einklang gebracht werden muss.

- Die mit Tintenschreibern erhaltenen Grafiken müssen wegen ihres abnormalen Formats zur Ablage zuerst auf normalformatiges Papier aufgeklebt werden.

Man könnte diese Nachteile dadurch umgehen, dass man die genannten Grafiken während der Messzeit digital speichert und anschliessend, beispielsweise während der nächsten Messung der Messreihe, auf einem Grafikdrucker ausdruckt. Da jedoch die meisten Grafikdrucker relativ langsam sind, beansprucht das Ausdrucken beispielsweise eines Diagramms, eines Spektrogramms und einer Längenvariationskurve wesentlich mehr Zeit als die nachfolgende Messung. Daraus ergibt sich, dass bei einer Messreihe an 10 oder 20 Stichproben eines Prüfgeräts die Messung der beispielsweise 3. Stichprobe erst dann beginnen kann, wenn der Drucker mit dem Ausdrucken der Messergebnisse der zweiten Stichprobe fertig ist, so dass zwischen den einzelnen Messungen einer Messreihe Pausen entstehen, welche die Leistungsfähigkeit der Prüfanlage stark reduzieren.

Die Erfindung hat nun die Aufgabe ein Verfahren der eingangs genannten Art aufzuzeigen, welches für die graphische Darstellung der Messergebnisse einerseits keinen Tintenschreiber benötigt und es andrerseits ermöglicht, abnormale Meßergebnisse einfach und schnell zu erkennen.

Diese Aufgabe wird erfindungsgemäss durch die Merkmale des Anspruchs 1 gelöst.

Da der Zeitaufwand für das Drucken einer solchen Sammelgrafik nur unwesentlich grösser ist als derjenige für das Drucken einer Einzelgrafik, ergibt sich eine wesentliche Verkürzung der für das Ausdrucken der Grafiken einer Messreihe erforderlichen Zeit. Wenn beispielsweise das Diagramm der Masseschwankungen, das Spektrogramm und die Längenvariationskurve ausgegeben werden sollen und die für den Ausdruck einer einzelnen Grafik erforderliche Zeit gleich t ist, dann beträgt der Zeitaufwand ohne die erfindungsgemässe Sammelgrafik bei n Einzelproben 3nt und reduziert sich bei Ausgabe einer Sammelgrafik auf 2nt+t und bei Ausgabe von zwei Sammelgrafiken auf nt+2t.

Nachfolgend wird die Erfindung anhand eines Ausführungsbeispiels und der Zeichnungen näher erläutert; es zeigen:

Fig. 1 eine Perspektivdarstellung eines Gleichmässigkeitsprüfers zur Bestimmung der Masseschwankungen eines textilen Prüfguts,

Fig. 2 ein Diagramm, ein Spektrogramm und eine Längenvariationskurve einer Einzelprobe,

Fig. 3 eine Sammelgrafik von 10 Spektrogrammen,

Fig. 4 eine Sammelgrafik von 10 Längenvariationskurven, und

Fig. 5 einen schematischen Vergleich des Papierbedarfs ohne und mit Ausgabe von Sammelgrafiken.

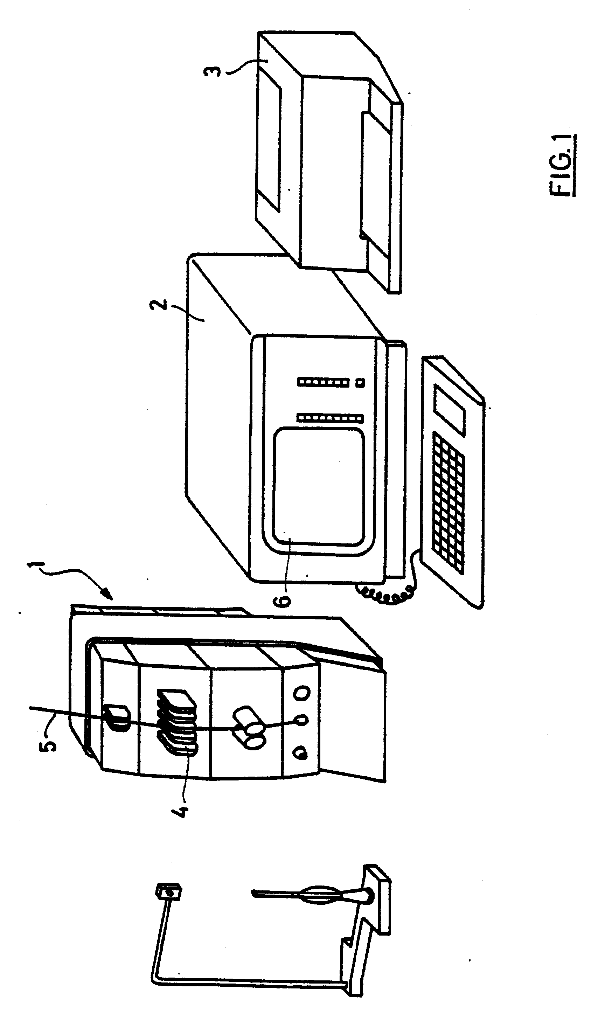

Gemäss Fig. 1 besteht ein Gleichmässigkeitsprüfer zur Bestimmung der Masseschwankungen von textilem Prüfgut, wie Garnen, Vorgarnen oder Bändern, aus dem eigentlichen Prüfgerät 1, der zugehörigen Auswerteeinheit 2 und aus einem Drucker 3. Das Prüfgerät 1 ist mit einem Messorgan 4 versehen, durch welches das mit 5 bezeichnete Prüfgut mit konstanter Geschwindigkeit gezogen wird. Die vom Messorgan 4 laufend erzeugten elektrischen Signale werden vom Rechner der Auswerteeinheit 2 verarbeitet und in geeigneter Form in einem in der Auswerteeinheit 2 integrierten Speicher gespeichert. Das Prüfgerät 1 ist allgemein bekannt und wird deswegen nicht näher beschrieben. Es wird in diesem Zusammenhang auf den von der Anmelderin der vorliegenden Patentanmeldung weltweit vertriebenen Gleichmässigkeitsprüfer USTER TESTER (USTER eingetragenes Warenzeichen der Zellweger Uster AG) verwiesen.

Vorzugsweise ist die Auswerteeinheit 2 mit einem Bildschirm 6 kombiniert, welcher wegen seiner trägheitslosen Anzeige bestens für die Darstellung von aus rasch ablaufenden Vorgängen anfallenden Daten, wie beispielsweise Diagrammen, geeignet ist. Es ist daher vorteilhaft, alle anfallenden Daten, wie Zahlenwerte und Grafiken, vorerst auf dem Bildschirm 6 zur Anzeige zu bringen. Man kann sich mit dieser Anzeige begnügen, welche dann später wieder gelöscht wird, oder man kann bestimmte Zahlen und Grafiken auswählen, um sie in geeigneter Form auf dem Drucker 3 auf Papier im Normalformat auszudrucken. Dabei erlaubt der heutige Stand der Technik den Ausdruck nicht nur der massgebenden Kurve, sondern auch des zugehörigen korrekt angeschriebenen Koordinatennetzes. Damit fällt das kostspielige Vordrucken des Registrierpapiers einschliesslich der damit verbundenen komplizierten Registriertechnik weg. Die auf Papier von Normalformat aufgedruckten Ergebnisse und Grafiken lassen sich ohne zusätzliche Manipulationen, wie Aufkleben, Anschreiben, ablegen. Auch die unbeliebte Handhabung von Tintenschreibern erübrigt sich, und schnell ablaufende Vorgänge werden unabhängig von der Vorschubgeschwindigkeit des Prüfguts 5 im Prüfgerät 1 immer mit der gleichen Amplitude ausgedruckt.

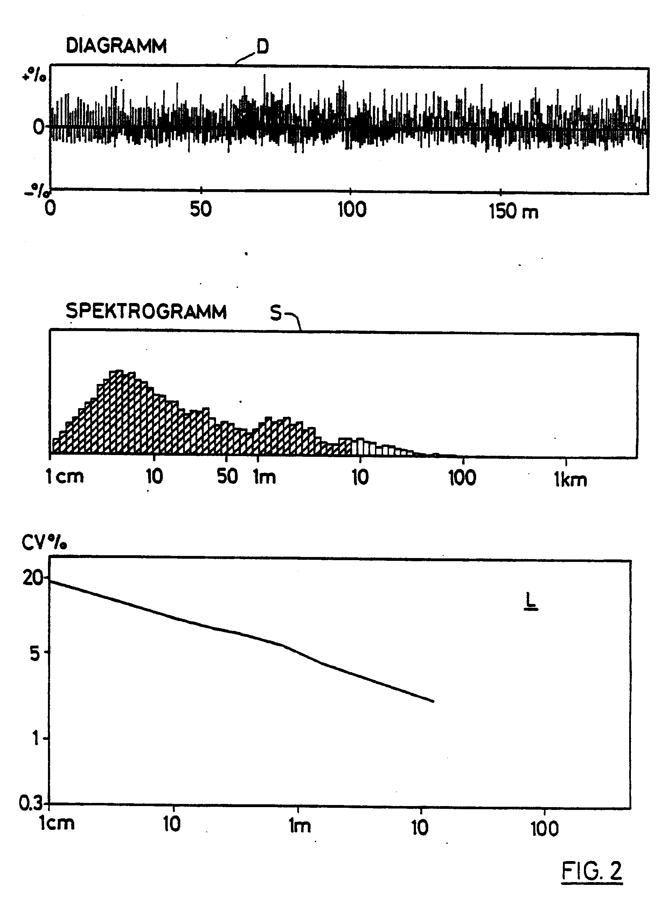

In Fig. 2 ist oben ein Diagramm D der Masseschwankungen längs des Prüfguts 5 (Abszisse: Materiallänge in Metern), in der Mitte ein Spektrogramm S (Abszisse: Wellenlänge) und unten eine Längenvariationskurve L (Abszisse: Schnittlänge) einer Einzelprobe dargestellt. Diese graphischen Darstellungen sind ebenfalls vom USTER TESTER her bekannt.

Wenn mit dem Gleichmässigkeitsprüfer (Fig. 1) wie üblich eine Messreihe für mehrere, beispielsweise 10 Einzelproben durchgeführt wird, dann werden also die drei in Fig. 2 dargestellten Grafiken für jede der 10 Einzelproben ausgedruckt. Hier wirkt sich nun die relativ niedrige Druckgeschwindigkeit des Druckers 3 nachteilig aus. Obwohl dank der Speicherung die Druckgeschwindigkeit ohne Einfluss auf die Genauigkeit der Wiedergabe bleibt, wird für den eigentlichen Druckvorgang relativ viel Zeit benötigt, so dass man mit dem Drucken in der Regel erst dann beginnen kann, wenn der zugehörige Prüfvorgang abgeschlossen ist.

Dies ist so lange kein Problem, als der Druckvorgang nicht länger dauert als die Prüfung der nächsten Einzelprobe innerhalb einer Messreihe. Denn dann werden die Messresultate der m-ten Einzelprobe bei der Prüfung der m+1-ten Einzelprobe ausgedruckt, usw., die Anzahl der pro Zeiteinheit durchführbaren Einzelprüfungen wird also nur durch die Prüfzeit und nicht durch die vom Drucker benötigte Zeit bestimmt.

Wenn so wie in Fig. 2 pro Einzelprobe allerdings mehr als eine Grafik ausgedruckt wird, dann übersteigt die Zeit für den Druckvorgang diejenige für die Prüfung einer Einzelprobe. Ausserdem besteht noch die Möglichkeit, mehrere Sensoren im Garnlauf anzuordnen, so dass in einem einzigen Prüfvorgang neben der Ungleichmässigkeit beispielsweise gleichzeitig auch noch Feinheit und Haarigkeit geprüft werden können.

In einem solchen Fall sind neben den in Fig. 2 dargestellten noch weitere Grafiken auszudrucken, und die Druckzeit steigt sehr rasch an, so dass in der Folge der Einzelprüfungen Pausen eingeschaltet werden müssen, um abzuwarten, bis der Drucker die gespeicherten Grafiken ausgedruckt hat. Damit sinkt die Leistungsfähigkeit der Prüfanlage rasch ab.

Bei Ausdruck der in Fig. 2 dargestellten drei Grafiken pro Einzelprüfung beträgt die Druckzeit etwa das Doppelte der Prüfzeit, und wegen des Zeitbedarfs für das Ausdrucken fällt die Leistungsfähigkeit der Prüfanlage etwa auf die Hälfte ab. Die Gesamtlänge des ausgedruckten Papierstreifens ist proportional zur Druckzeit, da der Ausdruck zeilenweise erfolgt.

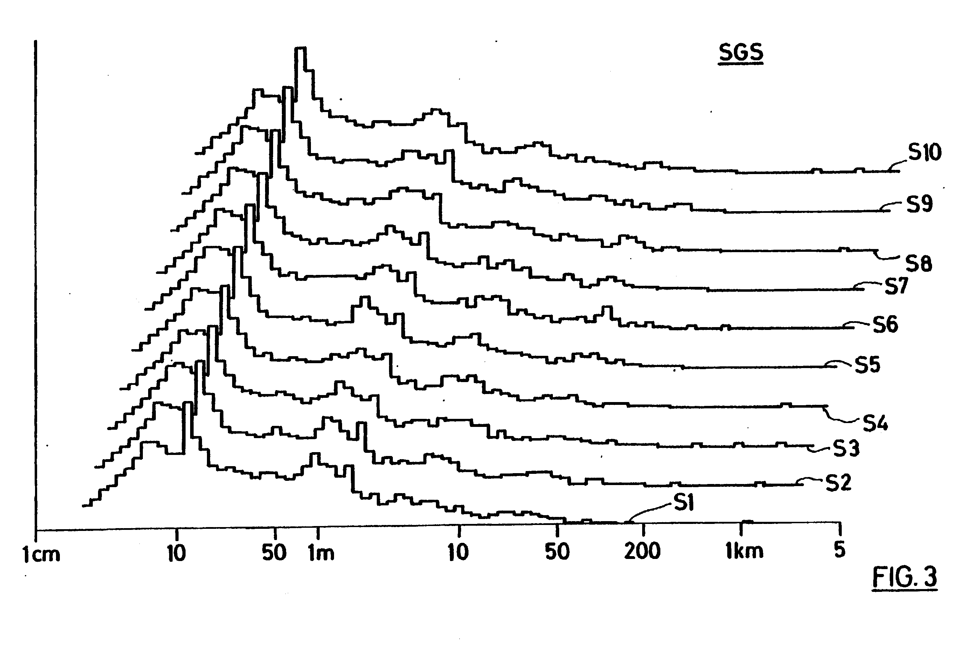

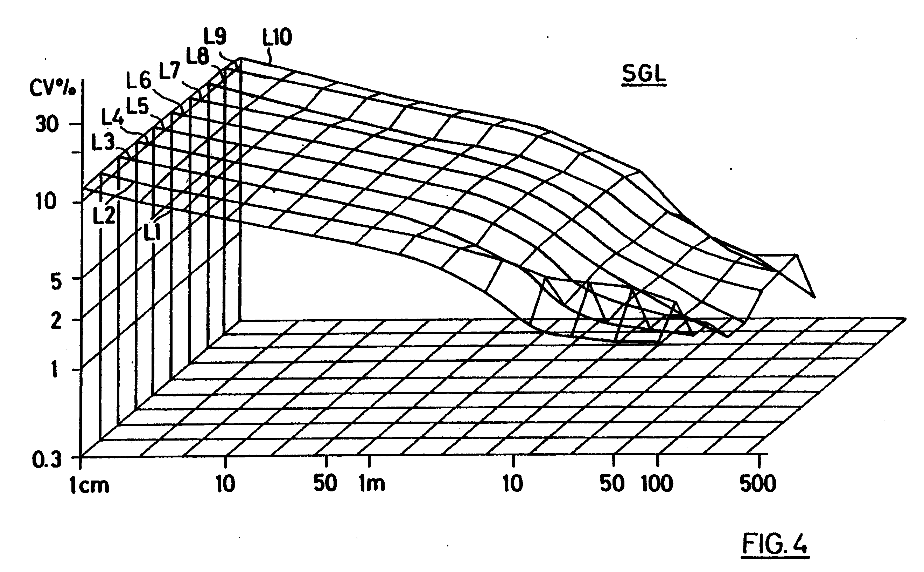

Man kann nun die Druckzeit drastisch reduzieren, wenn man gewisse Daten in Form einer Sammelgrafik ausdruckt. In Fig. 3 ist eine derartige Sammelgrafik SGS mit 10 Spektrogrammen S1-S10 und in Fig. 4 eine Sammelgrafik SGL mit 10 Längenvariationskurven L1-L10 dargestellt. Wenn die für das Ausdrucken einer Einzelgrafik erforderliche Zeit gleich $t$ ist, dann erfordert der Ausdruck von Einzelgrafiken gemäss Fig. 2 für 10 Einzelprüfungen eine Zeit von $3.10t = 30t$ und reduziert sich bei Ausgabe einer Sammelgrafik auf etwa $20t+t = 21t$ und bei Ausgabe von zwei Sammelgrafiken auf etwa $10t+2t = 12t$.

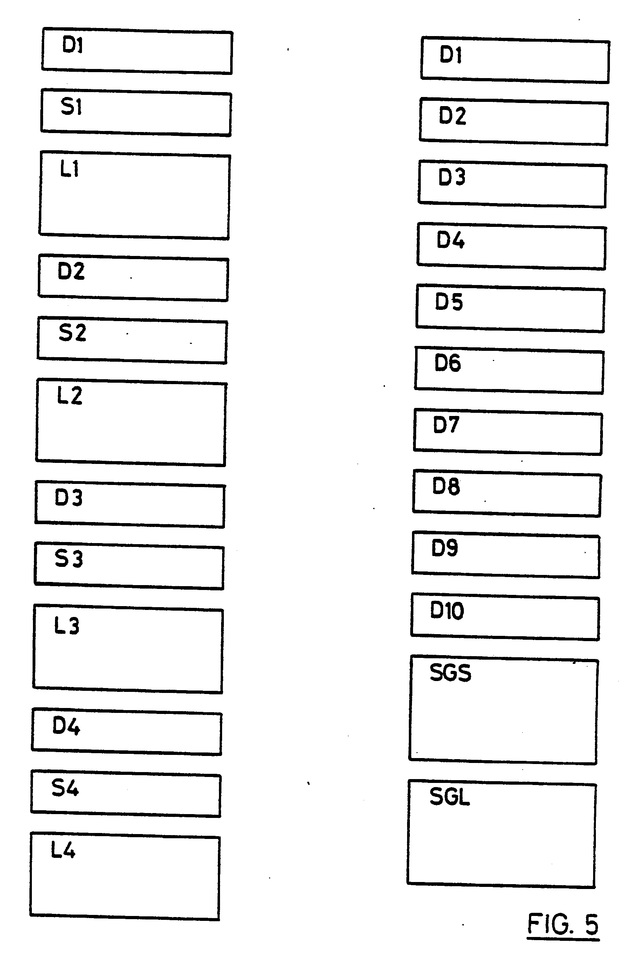

Wenn man für 10 Einzelprüfungen weiterhin 10 Diagramme D1 bis D10 (als Einzelgrafiken), jedoch je eine Sammelgrafik SGS und SGL für die 10 Spektrogramme bzw. die 10 Längenvariationskurven ausdruckt, dann ergibt sich, so wie in Fig. 5 angedeutet, eine Gesamtlänge des Papierstreifens, welche derjenigen entspricht, die erforderlich ist, wenn man für vier Einzelprüfungen nur Einzelgrafiken D1 bis D4, S1 bis S4, L1 bis L4 ausdruckt. Das bedeutet, dass sich die Druckzeit um 60% reduziert, was übrigens der im vorherigen Absatz gemachten rechnerischen Abschätzung entspricht, wodurch die Leistungsfähigkeit der Prüfanlage nicht mehr reduziert ist.

Sammelgrafiken SGS, SGL der in Fig. 3 und 4 dargestellten Art bieten neben dem Zeitgewinn noch weitere Vorteile: Eine Messreihe wird innerhalb eines gegebenen Prüfloses durchgeführt, und wenn das Prüflos homogen ist, dann sind in der Sammelgrafik alle Kurven untereinander gleich. Sind einzelne Kurven abnormal, so ist dies sofort augenscheinlich, wie man beispielsweise in Fig. 4 anhand der Kurven L2, L8 und L9 sieht. Derartige Einzelkurven können dann am Ende der Messreihe vom Speicher nochmals einzeln abgerufen und gesondert analysiert und/oder ausgedruckt werden (Ausnahmebericht).

Für die Sammelgrafiken können verschiedene Anordnungen der Kurven verwendet werden.

Es können alle n Kurven einer Sammelgrafik aufeinander geschrieben werden. Dann entsteht ein Gewirr von eng beieinander liegenden Kurven, dessen Ränder ein Mass für die grössten aufgetretenen Abweichungen darstellen. Diese Methode hat aber den Nachteil, dass einzelne Kurven nicht herausgelesen werden können, und dass die Reihenfolge nicht erkennbar ist.

Eine weitere Möglichkeit besteht darin, jede einzelne Kurve gegenüber der vorhergehenden in einer Richtung jeweils um einen festen, aber relativ kleinen Betrag zu verschieben. Dabei können sich aber die Kurven bei grösseren Ausschlägen so vermischen, dass eine Auswertung schwierig wird. Man müsste also die Verschiebung der Kurven vergrössern, was aber eine unzulässige Vergrösserung der Sammelgrafik zur Folge hätte.

Als günstige Methode erweist sich die in der Fig. 3 und 4 angewandte, wo jede Kurve gegenüber der vorhergehenden in zwei Richtungen, nach oben und nach rechts, um einen festen Betrag verschoben ist. Dadurch entsteht ein dreidimensionaler Effekt, welcher die Auswertung ganz wesentlich erleichtert.

Dass in den Sammelgrafiken der Fig. 3 und 4 jeweils 10 Kurven dargestellt sind, ist nur als Beispiel zu verstehen. Selbstverständlich könnten die Sammelgrafiken auch mehr als 10 Kurven enthalten. Ausserdem können Sammelgrafiken auch für andere als die dargestellten Daten ausgedruckt werden.

**Patentansprüche**

1. Verfahren zur Ausgabe von Messergebnissen in graphischer Form bei Prüfgeraten für textiles Prüfgut, wie Garne, Vorgaren und Bänder, mit welchem von jedem zu prüfenden Los eine Anzahl von Einzelproben in Form einer sogenannten Messreihe geprüft und zumindest ein Teil der Messergebnisse in graphischer Form ausgegeben wird, dadurch gekennzeichnet, dass während jeder Messreihe mindestens eine Art der für jede Einzelprobe anfallenden graphisch auszugebenden Daten in form des Wellenlängenspektrums (S) und/oder der Längenvariationskurve (L) digital gespeichert und nach Prüfung von n Einzelproben in Form einer Sammelgrafik (SGS, SGL) mit n in geeigneter Art angeordneten Einzelkurven ausgegeben wird.

2. Verfahren nach Anspruch 1, dadurch gekennzeichnet, dass während jeder Messreihe mindestens eine Art der für jede Einzelprobe anfallenden, graphisch auszugebenden Daten (D) sofort einzeln ausgegeben wird und die restlichen Daten (S, L) erst nach Prüfung von n Einzelproben in Form von Sammelgrafiken (SGS, SGL) ausgegeben werden.

3. Verfahren nach Anspruch 1 oder 2, dadurch gekennzeichnet, dass in den Sammelgrafiken (SGS, SGL) die einzelnen Kurven (S1-S10, L1-L10) mit einer gegenseitigen vertikalen und horizontalen Verschiebung geschrieben werden, so dass ein dreidimensionaler Effekt entsteht.

4. Verfahren nach Anspruch 3, dadurch gekennzeichnet, dass die Ausgabe der Messergebnisse auf einem Bildschirm (6) und/oder auf einem Drucker (3) erfolgt.

5. Verfahren nach Anspruch 4, dadurch gekennzeichnet, dass die Ausgabe der Messergebnisse auf dem Bildschirm (6) in Echtzeit und auf dem Drucker (3) bedarfsweise, und zwar gesamthaft oder teilweise, erfolgt.

6. Verfahren nach Anspruch 4, dadurch gekennzeichnet, dass die einzelnen Kurven (S1-S10, L1-L10) jeder Sammelgrafik (SGS, SGL) bedarfsweise nachträglich vom Speicher abrufbar und auf dem Bildschirm (6) und/oder auf dem Drucker (3) einzeln darstellbar sind.

7. Verfahren nach Anspruch 2, dadurch gekennzeichnet, dass für jede Einzelprobe einer Messreihe das Diagramm (D) der Schwankungen der gemessenen Kenngrösse sofort einzeln ausgegeben wird.

**EP 0 249 741 B2**

## Claims

1. Process for outputting measuring results in graphic form in test apparatus for textile test goods such as yarns, rovings or slivers, with which a number of individual samples of each batch to be tested are tested in the form of a so-called test series and the measuring results are output at least partly in graphic form, characterised in that during each test series at least one type of the data in the form of the wavelength spectrum (S) and/or the length variation curve (L) to be output graphically for each individual sample is stored digitally and is output in the form of a collective chart (SGS, SGL) with n suitably arranged individual graphs after n individual samples have been tested.

2. Process according to claim 1, characterised in that during each test series, at least one type of the data (D) to be output graphically for each individual sample is immediately output individually while the remaining data (S, L) are output in the form of collective charts (SGS, SGL) only after n individual samples have been tested.

3. Process according to claim 1 or claim 2, characterised in that in the collective charts (SGS, SGL), the individual graphs ($S_1$-$S_{10}$, $L_1$-$L_{10}$) are written with a vertical and horizontal shift relative to one another so that a three-dimensional effect is produced.

4. Process according to claim 3, characterised in that the measuring results are output on a screen (6) and/or on a printer (3).

5. Process according to claim 4, characterised in that the measuring results are output on the screen (6) in real time and on the printer (3) on demand, either in totality or partially.

6. Process according to claim 4, characterised in that the individual graphs ($S_1$-$S_{10}$, $L_1$-$L_{10}$) of each collective chart (SGS, SGL) may subsequently be recalled from memory on demand and shown individually on the screen (6) and/or on the printer (3).

7. Process according to claim 2, characterised in that for each individual sample of a test series, the diagram (D) of the fluctuations in measured parameter are immediately output individually.

## Revendications

1. Procédé de présentation de résultats de mesure sous forme graphique dans des appareils de contrôle pour des échantillons de textile, tels que des fils, des mèches ou des rubans, avec lesquels pour chaque lot à examiner on examine un certain nombre d'échantillons individuels sous forme d'une série de mesures et présente au moins une partie des résultats de mesure sous forme graphique, caractérisé en ce que pendant chaque série de mesures, au moins un genre des données sous forme de spectre des longueurs d'onde (S) et/ou de courbe de variation de longueurs obtenues pour chaque échantillon individuel et destinées à être présentées sous forme graphique est stocké numériquement et est présenté après examen de n échantillons individuels sous forme d'un graphique groupé (SGS, SGL) de n courbes individuelles arrangées d'une façon appropriée.

2. Procédé selon la revendication 1, caractérisé en ce que, pendant chaque série de mesures, au moins un genre de données (D) obtenues pour chaque échantillon individuel et destinées à être présenté graphiquement, est présenté individuellement immédiatement et les données restantes (S, L) ne sont présentées qu'après un examen de n échantillons individuels sous forme de graphiques groupés (SGS, SGL).

3. Procédé selon la revendication 1 ou 2, caractérisé en ce que les courbes individuelles (S1-S10, L1-L10) dans les graphiques individuels (SGS,SGL) sont écrites avec un décalage mutuel vertical et horizontal, de façon à créer un effet tridimensionnel.

4. Procédé selon la revendication 3, caractérisé en ce que la présentation des résultats de mesure est effectuée sur un écran de visualisation (6) et/ou sur une imprimante (3).

5. Procédé selon la revendication 4, caractérisé en ce que la présentation des résultats de mesure est effectuée sur un écran (6) en temps réel et sur l'imprimante (3) au besoin, et ceci entièrement ou partiellement.

6. Procédé selon la revendication 4, caractérisé en ce que les courbes individuelles (S1-S10, L1-L10) de chaque graphique groupé (SGS,SGL) sont susceptibles d'être au besoin ultérieurement appelées sélectivement et d'être individuellement représentées sur l'écran (6) et/ou sur l'imprimante (3).

7. Procédé selon la revendication 2, caractérisé en ce que, pour chaque échantillon individuel d'une série de mesures, le diagramme (D) des variations de la grandeur mesurée est immédiatement individuellement présenté.

FIG.1

EP 0 249 741 B2

DIAGRAMM          D

+°/o

0

-°/o

0          50          100          150 m

SPEKTROGRAMM          S

1 cm    10    50    1m    10    100    1km

CV°/o

20

5

1

0.3

1cm    10    1m    10    100

FIG. 2

FIG. 3

SGS

EP 0 249 741 B2

FIG.4

EP 0 249 741 B2

D1

S1

L1

D2

S2

L2

D3

S3

L3

D4

S4

L4

D1

D2

D3

D4

D5

D6

D7

D8

D9

D10

SGS

SGL

FIG. 5